# EUROPEAN PATENT SPECIFICATION

(11) **EP 3 756 437 B1**
(45) Date of publication and mention of the grant of the patent: **29.12.2021**
(21) Application number: 20183005.6
(22) Date of filing: 29.06.2020
(51) Int. Cl.: A01C 1/00, A01C 1/08, A01C 7/04

(54) **DEVICE AND METHOD FOR PERFORMING PRE-SOWING LASER STIMULATION OF SEEDS**
VORRICHTUNG UND VERFAHREN ZUR LASERSTIMULATION VON SAATGUT VOR DER AUSSAAT
DISPOSITIF ET PROCÉDÉ POUR STIMULATION LASER DE GRAINES AVANT L'ENSEMENCEMENT

(30) Priority: 29.06.2019 PL 43046719
(43) Date of publication of application: 30.12.2020
(73) Proprietor: Uniwersytet Rolniczy im. Hugona Kollataja w Krakowie, 31-120 Krakow (PL)
(72) Inventor: Klimek-Kopyra, Agnieszka, 30-298 Krakow (PL); Przybyszewski, Piotr, 32-010 Kocmyrzow (PL); Kulig, Bogdan, 31-871 Krakow (PL); Czech, Tomasz, 30-658 Krakow (PL)
(74) Representative: Hudy, Ludwik

(56) References cited:
- EP-A1- 3 187 033
- WO-A1-2008/155235
- WO-A1-2017/182261
- CA-A1- 2 364 218
- DE-A1- 3 024 349
- PL-B1- 169 380
- US-A1- 2018 192 577

## Description

According to the preamble of claim 1, the present invention relates to a device for improving germination of plant seeds by laser beam irradiation. More particularly, the present invention relates to a device for performing a pre-sowing laser stimulation of seeds, in particular by irradiation with adjustable energy doses, with a laser beam source, a seed container, a seed displacement assembly and a seed receiving unit, generally called device components that are housed in a housing of the device for performing a pre-sowing laser stimulation of seeds.

According to the preamble of claim 12, the present invention also relates to a method for performing a pre-sowing laser stimulation of seeds, in particular by irradiation with adjustable energy doses using a device for performing a pre-sowing laser stimulation of seeds, with a laser beam source, a seed container, a seed displacement assembly and a seed receiving unit housed in a housing of the device for performing a pre-sowing laser stimulation of seeds.

Nowadays, bio-stimulation of seeds is increasingly using laser light irradiation in a controlled manner to increase yields, as well as to increase plant resistance to diseases, mainly caused by fungi. In addition, it was found that by irradiating the seeds by laser light it is possible to influence positively on germination of seeds and growth of seedlings.

Publication EP 1 568 264 A1 of European patent application titled pt. "Method for improving germination of hard seed by laser beam irradiation and germination improved seed" teaches a method for improving the germination of plant seeds for use in agriculture and gardening, where the germination of the seeds is suppressed physically or physiologically due to the hard seed coat as the structures surrounding seed embryos, by secure and uniform treatment of each seed without any damage of seed embryo to produce seeds with improved germination in a stable manner. Germination of seeds is improved by allowing laser beam to irradiate a part of the seed coat of a plant seed to perforate a part of the seed coat to thereby overcome physical or physiological factors causing the suppression of germination, such as gas permeability and water permeability to seed embryo. The process is done with a laser beam, therefor the process can treat the seed coat appropriately in a short time, with no damage to the inner seed embryo of each seed.

The device for pre-sowing laser biostimulation of seeds described in the patent description PL 162598 is characterized in that a lens extending the beam of the laser light into a divergent beam is in the path of the laser beam. The chute is equipped with a known vibrator causing vibrations, as a result of which the moving seeds are distributed evenly in one layer and they fall evenly from this chute. The device is equipped with a mirror placed in the area of laser radiation outside the stream of falling seeds. The disadvantage of described device is the lack of regulation of energy doses of irradiated seeds.

In turn, in the device disclosed in the patent specification PL 169380, pre-sowing laser biostimulation of seeds by the method of their irradiation with adjustable energy doses is carried out in such a way, that the laser beam after passing through the known optical system is expanded divergently and illuminates the seeds moving along a vibrating sloping plane.

The main disadvantage of this device is that the laser beam after passing through the known optical system is expanded divergently and irradiates the seeds, which can significantly reduce the efficiency of seed irradiation. In addition, the device is a technical solution that does not apply to a pneumatic seed drill.

Publication of German patent application description No. DE 30 24 349 A1, titled "Verfahren zur Samenbehandlung vor der Saat und Vorrichtung zu dessen Durchführung", teaches a device that has a proportional seed supply to the treatment zone and a source of monochromatic radiation with a scanner. This device comprises two blocks and a chamber with a retaining trough for the treated seeds. One block connects the source of the monochromatic radiation to its scanner whereas the second block forms an irradiation chamber with an additional light source, an optical filter and a polariser. The retaining trough in this chamber has a slot at right angles to the scanning beam of the monochromatic light source.

In turn, publication of Canadian patent application description No. CA 2 364 218 A1, titled "Method and apparatus for treatment of biological objects, for example the seed, the plants, the mushrooms, the eggs, the spawn, the yeast, the soil and also a water by light irradiation", describes methods and apparatus for presowing preparation of seed, plant production, cultivation of plants under cover, mushroom production, poultry farming, fish breeding. In this invention the biological objects are activated by means of transformation of the luminous energy to the mechanical energy of the oscillations of the object's molecules by the use of resonance between the natural frequency of the oscillations of the object's molecules and the slip frequency of the interference flats which are generated, at least, by the two monochromatic coherent light beams.

An agricultural machine described in the International Publication No. WO 2008/155235 A1, titled "Controlling of a seed metering device on an agricultural machine" comprises at least one seed metering device for metering out seeds for distribution to soil over which the agricultural machine moves, which seed metering device comprises a seed metering element which is adapted to transport seeds and release at least one seed at a time, in addition to which the agricultural machine further comprises an electronic control unit which is adapted through controlling of the seed metering element to control the speed of the seeds transported by the seed metering element. A detection means is adapted to communicate with the control unit and to detect seeds which are transported by the seed metering element, and that the control unit is adapted to control the speed of the seeds transported by the seed metering element at least partly on the basis of signals from the detection means.

From publication of European patent application description No. EP 3 187 033 A1 titled "Seed sowing system and method of use", is known a seed sowing system for depositing seeds in a germination tray. The seed sowing system comprises a rotatable drum having a plurality of rows of apertures configured to pick up, carry, and release the seeds so that they fall into respective depressions in the germination tray. A light source is provided to illuminate the row of seeds as each row passes through an illumination region while being carried on the rotatable drum as well as a detector is positioned to capture light reflected from the rows of seeds as each row passes through the illumination region. Output signals from the detector is analyzed to determine an improper quantity of seeds at predetermined locations on the rotatable drum.

International Publication No. WO 2017/182261 A1 titled "Einzelkornsamaschine" teaches a precision seeder for introducing seeds into soil that comprises a singulating member that is suitable to singulate seeds delivered from a storage container and individually dispense the seeds. Furthermore, the precision seeder has an application unit for applying a dressing agent to a singulated seed. The application unit of the precision seeder is positioned in relation to the singulating member in such a way that the dressing agent is applied to a seed upon singulation of said seed and prior to the dispensing of said seed from the singulating member.

From publication of US patent application description No. US 2018/0192577 A1, titled "System and method for prescriptive seed treatment", is known a method for prescriptive seed treatment. A location can be calculated where a combination of seed and one or more types and/or amounts of seed-applied substances will be planted. The combination is selected, based at least in part, on one or more conditions. The combination is generated prior to being planted. The method can further include selecting a type of seed and/or a type and/or amount of the one or more seed-applied substances to be applied.

The methods and devices described above do not allow precise exposure of seeds to be sown to laser beam irradiation.

The object of the present invention is to propose a device that allows precise exposure of seeds to be sown to laser beam irradiation and to propose a method for improving germination of plant seeds by laser beam irradiation, especially by irradiation with adjustable energy doses.

According to the invention, this object is solved on the one hand by a device comprising the features of claim 1, and on the other hand by a method comprising the features of claim 12. The preferred embodiments of the invention are specified in the dependent claims.

In a device according to the invention a seed displacement assembly and lasers or sets of lasers are jointly integrated in one device, and the seed displacement assembly and the lasers or the sets of lasers are enclosed by a one housing.

A basic idea of the invention is to bringing closely together the processes of dosing the seeds and treating the seeds by the laser beams, so that dosing the seeds and treating the seeds by the laser beams can be performed simultaneously. This is achieved in that the seed displacement assembly and lasers or sets of lasers are arranged in the same device and in particular on the same device base, and that they are enclosed by a common housing.

The invention takes a different approach than previously known devices, in which seed displacement assembly was clearly spaced apart from lasers or sets of lasers.

In the device for performing pre-sowing laser stimulation of seeds, according to the invention the seed displacement assembly is a driven rotary element with seats transporting the seeds on which light beams are directed having the same or different wavelengths emitted by at least two lasers or sets of lasers and located in the housing of the device directly at a path of seed movement from the seed container to the seed receiving unit.

It is thereby particularly advantageous that the driven rotary element is shaped as a plate or a disk with seats transporting the seeds. Preferably, the plate or the disk with seats transporting the seeds can thus accommodate a lot of transporting seats situated in one or more rows having a shape of an arc.

According to one of preferred embodiments a particularly efficient operation of the device according to the invention in that can be seen, that the seats transporting the seeds are through holes with a diameter smaller than the dimensions of the seeds, whereby the through holes are made in the plate or the disk, which is rotatably mounted in the housing of the device, whereas one side of the disc has a surface with which the seeds in the seeds container are in contact and whereas the seeds are held in the through holes of a part of the disk by the force generated by vacuum in a vacuum chamber for a period of time when the part of the disk is located adjacently to an opening in a wall of the vacuum chamber, and the seeds fall off from the part of the disk after passing the part of the disk beyond the opening in the wall of the vacuum chamber, and the lasers, generating beams of light directed on the seeds held in the through holes, are placed at a side of the disk with the seeds held in the holes, and the vacuum chamber with the opening is located on the opposite side of the plate or the disk than the surface adjacent to an opening in a side wall of the seed container.

Another advantageous embodiment of the invention provides that an exposure zone of the seeds is located above a level of the seeds that are highs disposed in the seed container and above the level of the seeds that are highs disposed after falling into a lower container and/or a sowing assembly.

A further improvement can be achieved in that the beams of the laser light directed on the seeds located in the through holes are located at right angle to the surface, with which the seeds are in contact and which are held in the through holes of a part of the disk by the force generated by the vacuum.

According to another design variant of the invention it is advantageous, that the seats transporting the seeds are recesses located on a periphery of a plate or a disc, in which the seeds are held by a force G of a gravity of the seeds until a straight of the gravity force G action passing through a center of the gravity of the held seed will not exceed an edge of the recess, whereas the lasers are located at the periphery of the disc, and the beams of the light generated by the lasers are directed on the seeds.

It is thereby particularly preferred according to a further development of the invention that the recesses are located in a front surface of the disk, which is a lateral surface of a roll forming the plate or the disk.

A further improvement can be achieved in that near a place of a falling out the seeds from the recesses there is a stub for an outlet of an air stream acting on the falling out seeds.

According to another embodiment variant of the invention a further improvement is achieved in that beams of the light directed at the seeds located in the recesses are located at right angle to the side surface of the roll forming the disc.

According to yet another preferred embodiment a particularly efficient operation is achieved in that the plate or the disc with the seats transporting the seeds is a disc of a pneumatic seed drill.

It is thereby particularly advantageous that the lasers are lasers generating light with a beam wavelength in a range from 400 nm to 800 nm.

The lasers are located from the seeds at a distance in a range from 20 mm to 120 mm.

A method according to the invention is characterized in that a generation of a dosing seeds and treating the seeds by laser beams are carried out integrated in a device that is described above. With this method according to the invention, the advantages described above in performing pre-sowing laser stimulation of seeds, particularly in irradiation with adjustable energy doses can be realized.

According to the invention the seeds are placed in seats of a rotating transport disk and exposed to light for a predetermined period of time by means of beams of a light emitted by at least two lasers spaced from the seeds at a predetermined distance and generating the beams of the light of the same or different wavelengths over time, when the seeds are on lines with the beams of the light, and after exposure the seeds are directed to a seed receiving unit.

Preferably, a period of exposure time of the seeds amounts from 0.01 second up to 2 seconds.

Other features and advantages of the invention will become apparent from the description hereinafter with reference to the attached schematic drawings, which are provided only by way of non-limitative examples of the invention, wherein:
Fig. 1 schematically shows one embodiment of device for performing a pre-sowing laser stimulation of seeds;
Fig. 2 is an axonometric view of the device for performing the pre-sowing laser stimulation of the seeds;
Fig. 3 schematically shows another embodiment of device for performing the pre-sowing laser stimulation of the seeds; and
Fig. 4 schematically illustrates a plate or a disk and lasers or set of lasers of the device for performing the pre-sowing laser stimulation of the seeds.

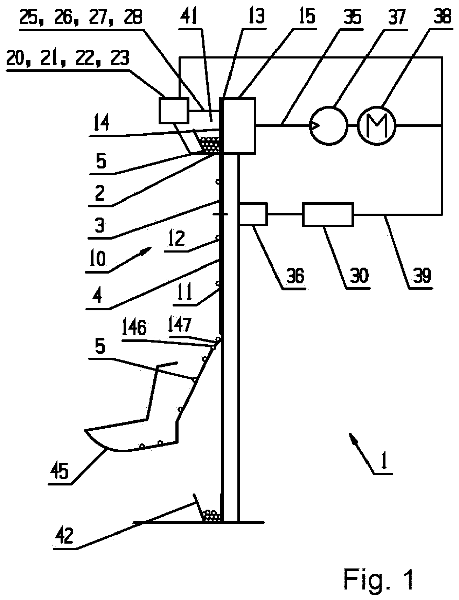

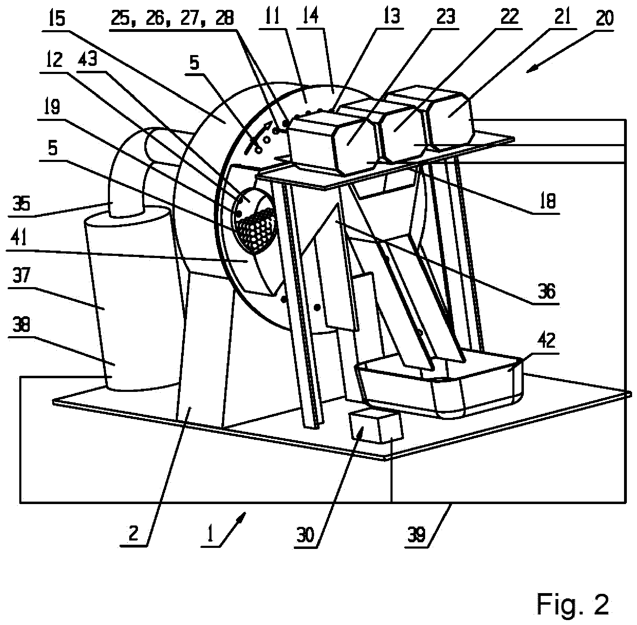

Figs. 1 and 2 schematically show one embodiment of device 1 for performing a pre-sowing laser stimulation of seeds 5, in particular by irradiation with adjustable energy doses, which comprises a set 20 of laser devices 21, 22, 23, emitting electromagnetic radiation in visible light, ultraviolet or infrared, hereinafter referred to as lasers, a seed container 41, a seed 5 displacement assembly 10 and a seed receiving unit 42, e.g. a seed container after irradiation, or a sowing assembly set 45, into which the seeds are directed after changing a position of an oscillating plate 147 rotating around a joint 146. The laser device assembly 20 or set of lasers, the seed 5 container 41, the seed 5 displacement device 10 and the seed receiving unit 42 after exposure or the sowing assembly set 45 are housed in a housing of the device for performing the pre-sowing laser stimulation of the seeds, which is mounted, for example, on a seed drill, in particular on a pneumatic seed drill. In one embodiment, the seeds after irradiation may be directed to the seed receiving unit 42 or to the sowing assembly set 45, generally referred to as seed receiving units.

In the embodiment shown in Figs. 1 and 2, the seed 5 displacement assembly 10 is a disk 11 with seats 12 transporting the seeds 5, on which is directed a set of beams 25 or beams 26, 27, 28, of a light emitted by at least two lasers 20, 21, 22, 23 with the same or different wavelengths of the light beams 26, 27, 28 and located in the housing 2 of the device 1 directly by a road 3 or path of the seeds 5 movement from the seed container 41 to the receiving unit 42 or the sowing assembly 45 the seeds 5 through an inlet 18.

The term "directly by the road or path of the seeds movement" means that the distances from a hole, through which the laser emits the light beam, to the irradiated seeds are such that the laser beams are not obscured of by another elements. For example, said distances amount between 10 mm and 120 mm. The seeds 5 transporting seats 12 in this embodiment are holes 13, in particular 19 shown in the tear, with a diameter smaller than the dimensions of the seeds 5 or less than the largest dimension of the perpendicular projection of a given seed 5 onto the plane of the hole 13, which prevents the grains from entering a vacuum chamber 15.

The holes 13 are throughholes and are made in the plate or disk 11 which is driven and rotatably mounted in the housing of the device 1 and does not come into contact with either a housing of the container 41 or a housing of the vacuum chamber 15, except that it is close enough to the vacuum chamber that the force generated by the vacuum is able to suck the seeds to the disc, as soon as the seeds are at the holes 13. The holes 13 in one solution are equidistant from a center of a rotation of the disc.

In other embodiments, the holes are arranged in rows on circumferences of wheels of different diameters, wherein the wheels have a center located in a center of the disk. One side of the disk 11 has a surface 14 with which the seeds in the container 41 contact. This means that one of the walls of the container 41 is a part or fragment of the disk 11. This part of the disk 11 closes an opening in the container in such a way, that edges of the opening made in the container lie in a plane located at a distance smaller than the smallest dimension of the seeds located in the seed 5 container 41, which prevents the seed from falling out of the container 41, which is located at a level lower than the level of the uppermost holes 13 of the rotating disk 11.

As soon as the certain fragment of the disk 11, during the rotation of the disc 11, will be a part of the wall of the container 41 and will be in an area in the immediate vicinity of an opening made in the wall or the housing of the vacuum chamber, in which the vacuum is created by a vacuum pump 37, driven by an engine 38 and connected to the vacuum chamber 15 by means of a stub 35, the seeds located in the container 41 right next to the holes 13 will be attracted to the holes 13 and will be held in the holes 13 by the force exerted by the vacuum for a period of time, when the certain fragment of the disk 11 is at the opening of the vacuum chamber 15. The opening of the vacuum chamber in contact with the plate or disc 11 may be a part of a surface of the vacuum chamber housing that does not have a wall.

In order for the plate or disc 11 to come into contact with the seeds 5 from the container 41, it is preferable that the container has an opening in a wall adjacent to the disk or it does not have a side wall on the side of the plate or disk 11. Thereby, the plate or disc 11 separates the space consisting of the vacuum chamber 15 and an interior of the seed container 41. As is apparent from Figs. 1 and 2, the plate or disc 11 is a common wall of the vacuum chamber 15 and the seed 5 container 41 at least in a part, and its outer surfaces cover the openings of the vacuum chamber 15 and the seed 5 container 41, except that the vacuum chamber 15 and the seed 5 container 41 are located at different sides of the plate or disk 11.

As soon as the certain fragment of the disc 11 with the held seeds 5 will rotate further, the seeds 5 will be lifted up, from the level of the container 41 to the exposure level, to the irradiation area and will be exposed to the beams 26, 27, 28 of the light emitted by at least two lasers 21, 22, 23 with the different wavelengths of the light beams 26, 27, 28, which are located on the side of the disk 11 with the surface 4 lying on an opposite side of the vacuum chamber 15. As can be seen from Figs. 1 and 2, the set 20 of the laser devices or the lasers 21, 22, 23 are situated on the same side of the plate or disc 11 that has the container 41 having an opening in the wall of the seed 5 container 41. Due to the opening, the seeds 5 come into contact with the disc 11 and can be attracted and held in the holes 13 of the disc or disc 11. In one embodiment, one entire wall of the vacuum chamber 15 is the part of a moving disk that is close enough to the vacuum chamber 15, that the vacuum is large enough, despite a gap between the plate or disk, to create a suction force greater than the gravity of the seed, attracted and held in the holes 13 of the disc 11. In another embodiment the vacuum chamber 15 may have a wall with an opening, that will extend from the seed container 41 lying at the opposite side of the disc to a trough into which the seeds 5 fall after falling off the disc 11 and which will about the surface of the disc 11 lying on the same side as the set 20 of the laser devices or the lasers 21, 22, 23. The seeds 5 when irradiated move along an arc with a radius equal to a distance of the holes 13 from the center rotation of the disc 11 and remain in the holes of the surface 4, and after the fragment of the plate or disc 11 with the seeds has moved out of the vacuum chamber 15 they fall off the plate or disc under the influence of the action of gravity.

Then, the seeds 5 fall down and move to the seed 5 receiving unit 42, for example a lower container and/or the sowing assembly 45, also called a coulter. In one embodiment of the invention, the light beams 26, 27, 28 directed at the seeds 5 located in the through holes 13 are situated at right angle to the surface 14. In other embodiments, the light beams 26, 27, 28 are situated at an angle depending on the seeder design.

The rotational speed of the disc 11 and a shutter speed or exposure time of the seeds 5 is regulated by means of a controller 30 known from the prior art and communicating by means of electric wires 39 with the set 20 of the lasers devices, in particular with the lasers 21, 22, 23, a motor 36 driving the disc 11 and a motor 38 driving the vacuum pump 37. In one embodiment, the motor 36 driving the disc 11 is a stepper motor that allows the disc 11 to move abruptly and stops it, or to slow down the rotational movement of the disc during the exposure time of the seeds, that is the shutter speed, which can be adjusted and correlated with light intensity beams.

In the device 1 for performing the pre-sowing laser stimulation of the seeds 5, various known lasers, depending on the seed, were used, including ruby, alexandrite, diode, and neodymium-yag lasers. In one embodiment of the invention, three lasers were used whose light beams were directed into the holes located on the circumference of the circle, whose center coincided with an axis of rotation of the disc. Each of the seeds in such a system was irradiated successively by each laser, with a specified interval between exposures, which resulted from an arrangement of exposure points. The disk, moving and stopping for a specific exposure time, thanks to the use of the stepper motor to drive the disc, allowed exposure of the seeds for a specified time and with any combination of the light wavelength, depending on the lasers used and their settings.

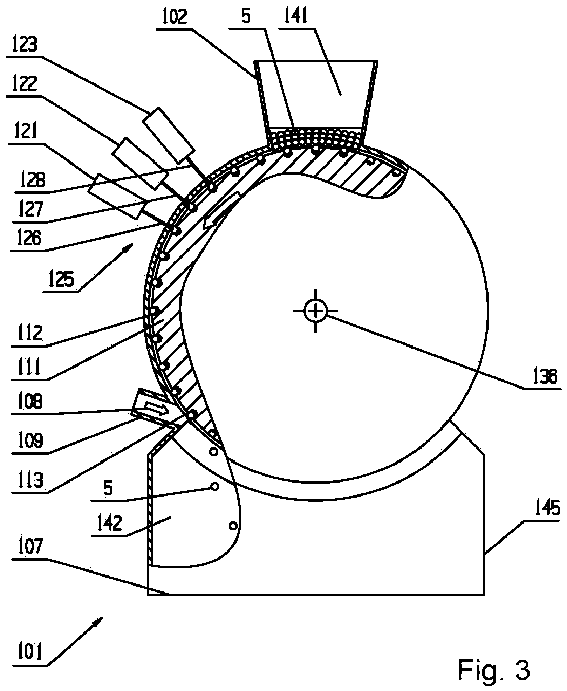

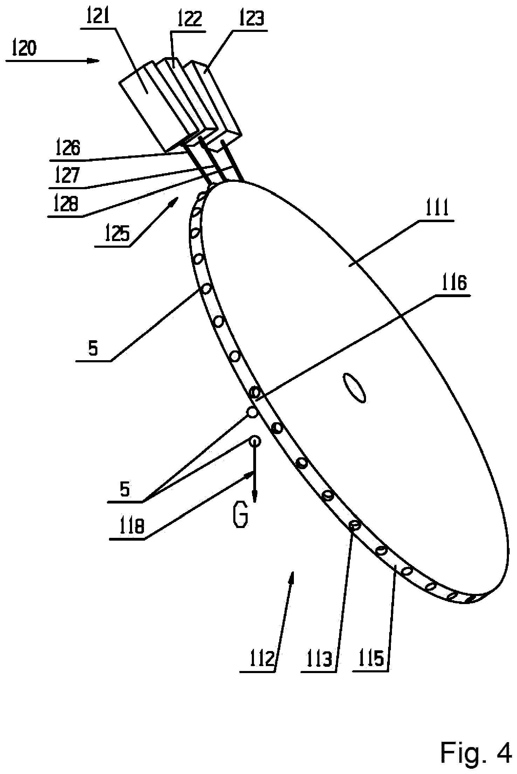

Fig. 3 schematically shows a device 101 for performing the pre-sowing laser stimulation the seeds 5, in which the seeds 5, when moving from a container 141 to the seed receiving unit, e.g. to a seed container 142 after irradiation or a seeding set 145, are held in seats 112 of a disc 111 by gravity. The seed 5 transporting seats 112 are recesses 113 located at a periphery 115 of the disk 111, shown in greater detail in Fig. 4. In one embodiment, the recesses 113 are located in a front surface of the disk, which is a lateral surface of a roll, formerly called a roll sidewall. In another embodiment not shown, the recesses are located in a base surface of the roll, from where they are blown out by air streams and directed to the seeding sets.

In yet another embodiment, the recesses are located at an interface between the base surface and a lateral surface of the roll, which is the disk 111. When the disk 111 rotates around its center 136, the seeds 5 from the container 141 having a hopper 102 fall into the recesses 113, in which the seeds 5 are held by a force G 118 of a gravity of seeds, shown in Fig. 4, until a straight of the gravity force G 118, action passing through a center of the gravity of the held seed 5, does not exceed an edge 116 of the recess 112. The seeds 5 moving in the recesses are subjected to a set 125 of beams in particular beams 126, 127, 128 of the light emitted by a set 120 of lasers devices, for example by lasers 121, 122, 123 with the same or different wavelengths of beams 126, 127, 128 of light, which are located directly at the periphery 115 of the disk 111.

The beams 126, 127, 128 of the light generated by the lasers 121, 122, 123 are directed at the seeds 5 and irradiate them. When irradiated, the seeds 5 moving in an arc with a radius equal to a distance of the recesses 113 from the center 136 of rotation of the disk 111 and fall out of them under the influence of the force G 118 of gravity, which is additionally shown in Fig. 4, in which the recess, after the seed 5 falls from it, is shown. In one embodiment of the invention, the seed 5 is exposed to an air stream, indicated by an arrow 108, which is blown through a stub 109 located near a seed fall point, which facilitates the seed fall out of the recesses 113. Then, the seeds 5 fall down and move to the seed 5 receiving unit 142, e.g. a lower container 107 and/or a sowing assembly 145, also called a coulter. A plane of the disk 111 may be inclined to a level depending on the design of the seed drill. In one embodiment, the seeds after irradiation may be directed to the seed receiving unit 142 or to the sowing assembly 145, generally referred to as seed receiving units.

The shutter speed or the exposure time of the seeds 5 is regulated by means of a controller, not shown in the drawing and known from the state of the art, and can be correlated with the light intensity of the beams. Based on the research it was found that the best effects determined by increasing yields and increasing plant resistance to diseases were obtained using lasers given, for example, in the publication EP 1 568 264 A1 of the European patent application entitled "Method for improving germination of hard seed by laser beam irradiation and germination improved seed", generating light beams with a wavelength in the range from 100 nm to 15000 nm, preferably in the range from 400 nm to 800 nm at the laser distance from the seeds in the range from 20 mm to 120 mm.

The lasers in exemplary embodiments are located from the seeds at a distance in a range from 20 mm to 120 mm.

In one embodiment, the seeds were irradiated, i.e. stimulated, for a period from 0.01 s to 2 s, preferably from 0.2 s to 1 s.

A method of performing a pre-sowing laser stimulation of seeds 5, in especially by irradiation with adjustable doses of energy, in a device for performing a pre-sowing laser stimulation of seeds 5, including a laser, a seed container, a seed displacement assembly and a seed receiving unit that are located in a housing of the device for performing the pre-sowing laser stimulation of the seeds, consists in the fact, that the seeds 5 are placed in seats 12 of a rotating transport disk 11 and exposed to light for a predetermined period of time by means of beams 26, 27, 28 of a light generated by at least two lasers 21, 22, 23 spaced from the seeds at a predetermined distance and generating the beams 26, 27, 28 of the light of the same or different wavelengths when the seeds 5 are on lines of the beams 26, 27, 28 of the light, and after exposure the seeds are directed to a seed 5 receiving unit.

The embodiments described above are only for describing the preferred embodiments of the present invention, and are not intended to limit the scope of the present invention.

Various modifications and improvements are intended to fall within the scope of the invention as defined in the appended claims.

### List of references

- 1, 101: Device for performing a pre-sowing laser stimulation of seeds
- 2: Housing of device
- 3: Road or path of seed movement
- 4: Surface
- 5: Seeds
- 10: Seed displacement assembly
- 11: Plate or disk
- 12: Seats transporting seeds
- 13: Hole
- 14: Surface of plate or disk
- 15: Vacuum chamber
- 18: Inlet
- 20: Laser device assembly or set of lasers
- 21,22,23: Laser
- 25; 26, 27, 28: Laser light beams
- 30: Controller
- 35: Stub
- 36: Motor driving disc
- 37: Vacuum pump
- 38: Motor driving the vacuum pump
- 39: Electric wires
- 41: Seed container
- 42: Seed receiving unit or seed container after irradiation
- 45: Sowing assembly
- 102: Hopper
- 107: Lower container
- 108: Arrow
- 109: Stub
- 111: Plate or disk
- 112: Seats transporting seeds
- 113: Recess
- 115: Periphery of disk
- 116: Edge of recess
- 118: Force G of gravity of seeds
- 120: Laser device assembly or set of lasers
- 121, 122, 123: Laser
- 125, 126, 127, 128: Laser light beams
- 136: Center of rotation of disk
- 141: Seed container
- 142: Seed receiving unit or seed container after irradiation
- 145: Sowing assembly

## Claims

1. A device (1, 101) for performing a pre-sowing laser stimulation of seeds (5), in particular by irradiation with adjustable energy doses, comprising a laser, a seed container, a seed displacement assembly and a seed receiving unit, generally called device components that are housed in a device housing for performing the pre-sowing laser stimulation of seeds (5), **characterized in that** the seed (5) displacement assembly (10) is a driven rotary element (11) with seats (12, 112) transporting the seeds (5) on which light beams (25; 26, 27, 28) are directed having the same or different wavelengths emitted by at least two lasers (21, 22, 23) or sets (20) of lasers and located in the housing (2) of the device (1) at a path (3) of movement of the seeds (5) from the seed container (41, 141) to the seed receiving unit (42, 45, 142, 145).

2. The device (1, 101) for performing the pre-sowing laser stimulation of the seeds (5) according to claim 1, **characterized in that** the driven rotary element is a plate or disk (11, 111) with the seats (12, 112) transporting the seeds (5).

3. The device (1) for performing the pre-sowing laser stimulation of the seeds (5) according to claim 1 or 2, **characterized in that** the seats (12) transporting the seeds (5) are through holes (13) with a diameter smaller than the dimensions of the seeds (5), whereby the through holes (13) are made in the disk (11), which is rotatably mounted in the housing of the device (1), whereas one side of the disc (11) has a surface (14) with which the seeds in the container (41) are in contact and whereas the seeds are held in the holes (13) of a part of the disk (11) by a force generated by a vacuum in a vacuum chamber (15) for a period of time when the part of the disk (11) is located adjacently to an opening in a wall of the vacuum chamber (15), and the seeds fall off from the part of the disk (11) after passing the part of the disk (11) beyond the opening in the wall of the vacuum chamber (15), and the lasers (20, 21, 22, 23), generating beams (25; 26, 27, 28) of a light directed on the seeds (5) located in the through holes are placed at a side of the disk (11), with the seeds held in the holes (13), and the vacuum chamber with the opening is located on the opposite side of the plate or the disk (11) than the surface (14) adjacent to an opening in a side wall of the container (41).

4. The device (1) for performing the pre-sowing laser stimulation of the seeds (5) according to claim 1 or 2 or 3, **characterized in that** an exposure zone of the seeds (5) is located above a level of the uppermost seeds (5) disposed in the container (41) and above the level of the uppermost seeds (5) that fell into a lower container and/or a sowing assembly (45).

5. The device (1) for performing the pre-sowing laser stimulation of the seeds (5) according to claim 3, **characterized in that** the beams (25; 26, 27, 28) of the light directed on the seeds (5) located in the through holes (13) are located at right angle to the surface (14) with which the seeds, located in the container (41), are in contact and which are held in the through holes (13) of the part of the disk (11) by the force generated by the vacuum.

6. The device (101) for performing the pre-sowing laser stimulation of the seeds (5) according to claim 1 or 2, **characterized in that** the seats (112) transporting the seeds (5) are recesses (113) located on a periphery (115) of the disc (111), in which the seeds (5) are held by a force G (118) of a gravity of the seeds until a straight of the gravity force G (118) action passing through a center of the gravity of the held seed (5) will not exceed an edge (116) of the recess (113), whereas a set (120) of the lasers or lasers(121, 122, 123) being located at the periphery (115) of the disc (111), and the beams (125; 126, 127, 128) of the light generated by the lasers (121, 122, 123) are directed at the seeds (5).

7. The device (101) for performing the pre-sowing laser stimulation of the seeds (5) according to claim 6, **characterized in that** the recesses (113) are located in a front surface of the disk, which is a lateral surface of a roll forming the disk (111).

8. The device (101) for performing the pre-sowing laser stimulation of the seeds (5) according to claim 6 or 7, **characterized in that** near a place of a falling out the seeds (5) from the recesses (113) there is a stub (109) for an outlet of an air stream acting on the falling out seeds (5).

9. The device (101) for performing the pre-sowing laser stimulation of the seeds (5) according to claim 6 or 7, **characterized in that** beams (126, 127, 128) of the light directed at the seeds (5) located in the recesses (113) are located at right angle to the lateral surface of the roll forming the plate or disc (111).

10. The device (1, 101) for performing the pre-sowing laser stimulation of the seeds (5) according to claim 1 or 2 or 3 or 4 or 5 or 6 or 7 or 8 or 9, **characterized in that** the plate or disc (11, 111) with the seats (12, 112) transporting the seeds (5) is the disc of a pneumatic seed drill.

11. The device (1, 101) for performing the pre-sowing laser stimulation of seeds (5) according to claim 1 or 2 or 3 or 4 or 5 or 6 or 7 or 8 or 9 or 10, **characterized in that** the lasers are lasers generating the light beam (25; 26, 27, 28) with a wavelength in a range from 400 nm to 800 nm at the laser distance from the seeds in a range from 20 mm to 120 mm.

12. A method of performing a pre-sowing laser stimulation of seeds (5), especially by irradiation with adjustable doses of energy, in a device for performing a pre-sowing laser stimulation of seeds (5) according to any one of claims 1 to 11, including a laser, a seed container, a seed displacement assembly and a seed receiving unit that are located in a housing of the device for performing the pre-sowing laser stimulation of the seeds, wherein the seeds (5) are placed in seats (12) of a rotating transport disk (11, 111) and exposed to light for a predetermined period of time by means of beams (25; 26, 27, 28) of a light emitted by at least two lasers (21, 22, 23) spaced from the seeds at a predetermined distance and generating the beams (25; 26, 27, 28) of the light of the same or different wavelengths when the seeds (5) are on lines of the beams (25; 26, 27, 28) of the light, and after exposure the seeds are directed to the seed (5) receiving unit (42, 45, 142, 145).

13. The method for performing the pre-sowing laser stimulation of the seeds (5) according to claim 12, **characterized in that** a radiation of the same or different wavelengths is generated by means of the lasers generating the light beams with the wavelength in a range from 400 nm to 800 nm with a laser distance from the seeds in the range from 20 mm to 120 mm and an exposure time from 0.1 s up to 2 seconds.

14. The method for performing the pre-sowing laser stimulation of the seeds (5) according to claim 12 or 13, **characterized in that** an exposure time of the seeds (5) is from 0.1 s up to 2 seconds.

## Patentansprüche

1. Eine Vorrichtung (1, 101) zum Durchführen einer Laserstimulation von Saatgut (5) vor der Aussaat, insbesondere durch Bestrahlung mit einstellbaren Energiedosen, umfassend einen Laser, einen Saatgutbehälter, eine Saatgutverschiebeanordnung und eine Saatgutaufnahmeeinheit, allgemein als Vorrichtungskomponenten bezeichnet, die in einem Vorrichtungsgehäuse untergebracht sind, um die Laserstimulation von Saatgut (5) vor der Aussaat durchzuführen, **dadurch gekennzeichnet, dass** die Verschiebeanordnung (10) für das Saatgut (5) ein angetriebenes Drehelement (11) mit Aufnahmesitzen (12, 112) ist, die das Saatgut (5) transportieren, auf das Lichtstrahlen (25; 26, 27, 28) gerichtet sind, die gleiche oder unterschiedliche Wellenlängen aufweisen, die von mindestens zwei Lasern (21, 22, 23) oder Sätzen (20) von Lasern emittiert werden, und die sich in dem Gehäuse (2) der Vorrichtung (1) an einer Bewegungsbahn (3) des Saatguts (5) von dem Saatgutbehälter (41, 141) zu der Saatgutaufnahmeeinheit (42, 45, 142, 145) befinden.

2. Die Vorrichtung (1) zum Durchführen der Laserstimulation des Saatguts (5) vor der Aussaat nach Anspruch 1, **dadurch gekennzeichnet, dass** das angetriebene Drehelement eine Platte oder Scheibe (11, 111) ist, wobei die Aufnahmesitze (12, 112) das Saatgut (5) transportieren.

3. Die Vorrichtung (1) zum Durchführen der Laserstimulation des Saatguts (5) vor der Aussaat nach Anspruch 1 oder 2, **dadurch gekennzeichnet, dass** die das Saatgut (5) transportierenden Aufnahmesitze (12) Durchgangslöcher (13) sind mit einem Durchmesser, der kleiner ist als die Abmessungen des Saatguts (5), wobei die Durchgangslöcher (13) in der Scheibe (11) eingebracht sind, die in dem Gehäuse der Vorrichtung (1) drehbar gelagert ist, wobei eine Seite der Scheibe (11) eine Oberfläche (14) aufweist, mit der das Saatgut in dem Behälter (41) in Kontakt ist, und wobei das Saatgut in den Löchern (13) eines Teils der Scheibe (11) durch eine Kraft, die durch ein Vakuum in einer Vakuumkammer (15) erzeugt wird, für eine Zeitspanne gehalten wird, wenn sich der Teil der Scheibe (11) neben einer Öffnung in einer Wand der Vakuumkammer (15) befindet, und das Saatgut von dem Teil der Scheibe (11) abfällt, nachdem der Teil der Scheibe (11) die Öffnung in der Wand der Vakuumkammer (15) passiert hat, und die Laser (20, 21, 22, 23), die Strahlen (25; 26, 27, 28) eines Lichts erzeugen, die auf das in den Durchgangslöchern befindliche Saatgut (5) gerichtet sind, an einer Seite der Scheibe (11) angeordnet sind, wobei das Saatgut in den Löchern (13) gehalten wird und sich die Vakuumkammer mit der Öffnung auf der Seite der Platte oder der Scheibe (11) gegenüberliegend der Oberfläche (14) neben einer Öffnung in einer Seitenwand des Behälters (41) befindet.

4. Die Vorrichtung (1) zum Durchführen der Laserstimulation des Saatguts (5) vor der Aussaat nach Anspruch 1 oder 2 oder 3, **dadurch gekennzeichnet, dass** sich eine Belichtungszone des Saatguts (5) oberhalb eines Niveaus des obersten Saatguts (5), das im Behälter (41) angeordnet ist, und oberhalb des Niveaus des obersten Saatguts (5), das in einen unteren Behälter und/oder die Aussaatanordnung (45) gefallen ist, angeordnet ist.

5. Die Vorrichtung (1) zum Durchführen der Laserstimulation des Saatguts (5) vor der Aussaat nach Anspruch 3, **dadurch gekennzeichnet, dass** die Lichtstrahlen (25; 26, 27, 28), die auf das in den Durchgangslöchern (13) befindliche Saatgut (5) gerichtet sind, rechtwinklig zu der Oberfläche (14) angeordnet sind, mit der das in dem Behälter (41) befindliche Saatgut, das durch die vom Vakuum erzeugte Kraft in den Durchgangslöchern (13) des Teils der Scheibe (11) gehalten wird, in Kontakt ist.

6. Die Vorrichtung (101) zum Durchführen der Laserstimulation des Saatguts (5) vor der Aussaat nach Anspruch 1 oder 2, **dadurch gekennzeichnet, dass** die Aufnahmesitze (112), die das Saatgut (5) transportieren, Aussparungen (113) sind, die sich an einem Umfang (115) der Scheibe (111) befinden, in denen das Saatgut (5) durch eine Schwerkraft G (118) des Saatguts gehalten werden, bis eine Gerade der Wirkung der Schwerkraft G (118), die durch einen Schwerpunkt des festgehaltenen Saatguts (5) verläuft, eine Kante (116) der Aussparung (113) nicht überschreitet, wobei sich ein Satz (120) der Laser oder die Laser (121, 122, 123) am Umfang (115) der Scheibe (111) befinden, und die Strahlen (125; 126, 127, 128) des von den Lasern (121, 122, 123) erzeugten Lichts auf das Saatgut (5) gerichtet werden.

7. Die Vorrichtung (101) zum Durchführen der Laserstimulation des Saatguts (5) vor der Aussaat nach Anspruch 6, **dadurch gekennzeichnet, dass** sich die Aussparungen (113) in einer Vorderfläche der Scheibe befinden, die eine Seitenfläche einer die Scheibe (111) bildenden Rolle ist.

8. Die Vorrichtung (101) zum Durchführen der Laserstimulation des Saatguts (5) vor der Aussaat nach Anspruch 6 oder 7, **dadurch gekennzeichnet, dass** in der Nähe einer Stelle, an der das Saatgut (5) aus den Aussparungen (113) herausfällt, ein Stutzen (109) für den Auslass eines Luftstroms, der auf das herausfallende Saatgut (5) wirkt, vorhanden ist.

9. Die Vorrichtung (101) zum Durchführen der Laserstimulation des Saatguts (5) vor der Aussaat nach Anspruch 6 oder 7, **dadurch gekennzeichnet, dass** die auf das in den Aussparungen (113) befindliche Saatgut (5) gerichteten Lichtstrahlen (126, 127, 128) rechtwinklig zu der Seitenfläche der die Platte oder Scheibe (111) bildenden Rolle angeordnet sind.

10. Die Vorrichtung (1, 101) zum Durchführen der Laserstimulation des Saatguts (5) vor der Aussaat nach Anspruch 1 oder 2 oder 3 oder 4 oder 5 oder 6 oder 7 oder 8 oder 9, **dadurch gekennzeichnet, dass** die Platte oder Scheibe (11, 111) mit den Aufnahmesitzen (12, 112), die das Saatgut (5) transportieren, die Scheibe einer pneumatischen Sämaschine ist.

11. Die Vorrichtung (1, 101) zum Durchführen der Laserstimulation von Saatgut (5) vor der Aussaat nach Anspruch 1 oder 2 oder 3 oder 4 oder 5 oder 6 oder 7 oder 8 oder 9 oder 10, **dadurch gekennzeichnet, dass** es sich bei den Lasern um Laser handelt, die den Lichtstrahl (25; 26, 27, 28) mit einer Wellenlänge im Bereich von 400 nm bis 800 nm bei einem Laserabstand zum Saatgut in einem Bereich von 20 mm bis 120 mm erzeugen.

12. Ein Verfahren zur Durchführung einer Laserstimulation von Saatgut (5) vor der Aussaat, insbesondere durch Bestrahlung mit einstellbaren Energiedosen, in einer Vorrichtung zum Durchführen einer Laserstimulation von Saatgut (5) vor der Aussaat nach einem der Ansprüche 1 bis 11, umfassend einen Laser, einen Saatgutbehälter, eine Saatgutverschiebeanordnung und eine Saatgutaufnahmeeinheit, die sich in einem Gehäuse der Vorrichtung zum Durchführen der Laserstimulation des Saatguts vor der Aussaat befinden, wobei das Saatgut (5) in Aufnahmesitze (12) einer rotierenden Transportscheibe (11, 111) platziert wird und für eine vorbestimmte Zeitspanne mittels Strahlen (25; 26, 27, 28) eines Lichts belichtet wird, das von mindestens zwei Lasern (21, 22, 23) emittiert wird, die von dem Saatgut in einem vorbestimmten Abstand beabstandet sind und die Lichtstrahlen (25; 26, 27, 28) mit gleichen oder unterschiedlichen Wellenlängen erzeugen, wenn sich das Saatgut (5) auf Linien der Lichtstrahlen (25; 26, 27, 28) befindet, und das Saatgut nach der Belichtung zu der Aufnahmeeinheit (42, 45, 142, 145) für das Saatgut (5) geleitet wird.

13. Das Verfahren zum Durchführen der Laserstimulation des Saatguts (5) vor der Aussaat nach Anspruch 12, **dadurch gekennzeichnet, dass** eine Strahlung gleicher oder unterschiedlicher Wellenlängen mittels der Laser erzeugt wird, die die Lichtstrahlen mit der Wellenlänge in einem Bereich von 400 nm bis 800 nm mit einem Laserabstand von dem Saatgut in dem Bereich von 20 mm bis 120 mm und einer Belichtungszeit von 0,1 s bis 2 Sekunden erzeugen.

14. Das Verfahren zum Durchführen der Laserstimulation des Saatguts (5) vor der Aussaat nach Anspruch 12 oder 13, **dadurch gekennzeichnet, dass** die Belichtungszeit des Saatguts (5) von 0,1 s bis zu 2 Sekunden beträgt.

## Revendications

1. Un dispositif (1, 101) pour effectuer une stimulation laser de graines (5) avant l'ensemencement, en particulier par irradiation avec des doses d'énergie ajustables, comprenant un laser, un récipient de graines, un ensemble de déplacement de graines et une unité de réception de graines, généralement appelés composants de dispositif qui sont reçus dans un boîtier de dispositif pour effectuer la stimulation laser de graines (5) avant l'ensemencement, **caractérisé par le fait que** l'ensemble (10) de déplacement de graines (5) est un élément rotatif entraîné (11) avec des sièges (12, 112) transportant les graines (5) sur lesquelles sont dirigés des faisceaux de lumière (25; 26, 27, 28) ayant des longueurs d'onde identiques ou différentes émises par au moins deux lasers (21, 22, 23) ou ensembles (20) de lasers et situés dans le boîtier (2) du dispositif (1) sur un trajet (3) de déplacement des graines (5) du récipient de graines (41, 141) à l'unité de réception de graines (42, 45, 142, 145).

2. Le dispositif (1) pour effectuer la stimulation laser des graines (5) avant l'ensemencement, selon la revendication 1, **caractérisé par le fait que** l'élément rotatif entraîné est une plaque ou un disque (11, 111) avec les sièges (12, 112) transportant les graines (5).

3. Le dispositif (1) pour effectuer la stimulation laser des graines (5) avant l'ensemencement, selon l'une des revendications 1 ou 2, **caractérisé par le fait que** les sièges (12) transportant les graines (5) sont des trous traversants (13) avec un diamètre inférieur aux dimensions des graines (5), les trous traversants (13) étant réalisés dans le disque (11), qui est monté de manière rotative dans le boîtier du dispositif (1), tandis qu'un côté du disque (11) a une surface (14) avec laquelle les graines dans le récipient (41) sont en contact, et tandis que les graines sont maintenues dans les trous (13) d'une partie du disque (11) par une force générée par un vide dans une chambre à vide (15) pendant une période de temps lorsque la partie du disque (11) est située de manière adjacente à une ouverture dans une paroi de la chambre à vide (15), et les graines tombent de la partie du disque (11) après passage de la partie du disque (11) au-delà de l'ouverture dans la paroi de la chambre à vide (15), et les lasers (20, 21, 22, 23), générant des faisceaux (25; 26, 27, 28) d'une lumière dirigés sur les graines (5) situées dans les trous traversants, sont placés d'un côté du disque (11), avec les graines maintenues dans les trous (13), et la chambre à vide avec l'ouverture est située du côté de la plaque ou du disque (11) opposé à la surface (14) adjacente à une ouverture dans une paroi latérale du récipient (41).

4. Le dispositif (1) pour effectuer la stimulation laser des graines (5) avant l'ensemencement, selon l'une des revendications 1 ou 2 ou 3, **caractérisé par le fait qu'**une zone d'exposition des graines (5) est située au-dessus d'un niveau des graines (5) les plus hautes disposées dans le récipient (41) et au-dessus du niveau des graines les plus hautes (5) qui sont tombées dans un récipient inférieur et/ou un ensemble d'ensemencement (45).

5. Le dispositif (1) pour effectuer la stimulation laser des graines (5) avant l'ensemencement, selon la revendication 3, **caractérisé par le fait que** les faisceaux (25; 26, 27, 28) de la lumière dirigés sur les graines (5) situées dans les trous traversants (13) sont situés à angle droit par rapport à la surface (14) avec laquelle les graines, situées dans le récipient (41), sont en contact et qui sont maintenues dans les trous traversants (13) de la partie du disque (11) par la force générée par le vide.

6. Le dispositif (101) pour effectuer la stimulation laser des graines (5) avant l'ensemencement, selon l'une des revendications 1 ou 2, **caractérisé par le fait que** les sièges (112) transportant les graines (5) sont des renfoncements (113) situés sur une périphérie (115) du disque (111), dans lesquels les graines (5) sont maintenues par une force G (118) de gravité des graines tant qu'une droite de l'action de la force de gravité G (118) passant par un centre de gravité de la graine maintenue (5) ne dépasse pas un bord (116) du renfoncement (113), tandis qu'un ensemble (120) des lasers ou des lasers (121, 122, 123) sont situés à la périphérie (115) du disque (111), et les faisceaux (125; 126, 127, 128) de la lumière générée par les lasers (121, 122, 123) sont dirigés sur les graines (5).

7. Le dispositif (101) pour effectuer la stimulation laser des graines (5) avant l'ensemencement, selon la revendication 6, **caractérisé par le fait que** les renfoncements (113) sont situés dans une surface avant du disque, qui est une surface latérale d'un rouleau formant le disque (111).

8. Le dispositif (101) pour effectuer la stimulation laser des graines (5) avant l'ensemencement, selon l'une des revendications 6 ou 7, **caractérisé par le fait que**, près d'un endroit où les graines (5) tombent des renfoncements (113), il y a un embout (109) pour une sortie d'un courant d'air agissant sur les graines tombantes (5).

9. Le dispositif (101) pour effectuer la stimulation laser des graines (5) avant l'ensemencement, selon l'une des revendications 6 ou 7, **caractérisé par le fait que** des faisceaux (126, 127, 128) de la lumière dirigés sur les graines (5) situées dans les renfoncements (113) sont situés à angle droit par rapport à la surface latérale du rouleau formant la plaque ou le disque (111).

10. Le dispositif (1, 101) pour effectuer la stimulation laser des graines (5) avant l'ensemencement, selon l'une des revendications 1 ou 2 ou 3 ou 4 ou 5 ou 6 ou 7 ou 8 ou 9, **caractérisé par le fait que** la plaque ou le disque (11, 111) avec les sièges (12, 112) transportant les graines (5) est le disque d'un semoir pneumatique.

11. Le dispositif (1, 101) pour effectuer la stimulation laser des graines (5) avant l'ensemencement, selon l'une des revendications 1 ou 2 ou 3 ou 4 ou 5 ou 6 ou 7 ou 8 ou 9 ou 10, **caractérisé par le fait que** les lasers sont des lasers générant le faisceau lumineux (25; 26, 27, 28) avec une longueur d'onde dans une plage de 400 nm à 800 nm à la distance laser par rapport aux graines dans une plage de 20 mm à 120 mm.

12. Un procédé pour effectuer une stimulation laser de graines (5) avant l'ensemencement, notamment par irradiation avec des doses d'énergie ajustables, dans un dispositif pour effectuer une stimulation laser de graines (5) avant l'ensemencement, selon l'une quelconque des revendications 1 à 11, comprenant un laser, un récipient de graines, un ensemble de déplacement de graines et une unité de réception de graines qui sont situés dans un boîtier du dispositif pour effectuer la stimulation laser de graines avant l'ensemencement, dans lequel les graines (5) sont placées dans des sièges (12) d'un disque de transport rotatif (11, 111) et exposées à la lumière pendant une période de temps prédéterminée au moyen de faisceaux (25; 26, 27, 28) d'une lumière émise par au moins deux lasers (21, 22, 23) espacés des graines à une distance prédéterminée et générant les faisceaux (25; 26, 27, 28) de la lumière des longueurs d'onde identiques ou différentes lorsque les graines (5) sont sur des lignes des faisceaux (25; 26, 27, 28) de la lumière et, après exposition, les graines sont dirigées sur l'unité (42, 45, 142, 145) de réception de graines (5).

13. Le procédé pour effectuer la stimulation laser des graines (5) avant l'ensemencement, selon la revendication 12, **caractérisé par le fait qu'**un rayonnement des longueurs d'onde identiques ou différentes est généré au moyen des lasers générant les faisceaux avec la longueur d'onde dans une plage de 400 nm à 800 nm avec une distance de laser par rapport aux graines dans la plage de 20 mm à 120 mm et un temps d'exposition de 0,1 s jusqu'à 2 secondes.

14. Le procédé pour effectuer la stimulation laser des graines (5) avant l'ensemencement, selon l'une des revendications 12 ou 13, **caractérisé par le fait qu'**un temps d'exposition des graines (5) est de 0,1 s jusqu'à 2 secondes.
